(19) Europäisches Patentamt
European Patent Office
Office européen des brevets

(11) **EP 4 324 644 A1**

(12) **EUROPEAN PATENT APPLICATION**
published in accordance with Art. 153(4) EPC

(43) Date of publication:
**21.02.2024 Bulletin 2024/08**

(21) Application number: **22788125.7**

(22) Date of filing: **08.04.2022**

(51) International Patent Classification (IPC):
**B32B 27/32** (2006.01)          **B32B 27/40** (2006.01)
**B65D 65/40** (2006.01)

(52) Cooperative Patent Classification (CPC):
**B32B 27/32; B32B 27/40; B65D 65/40;**
Y02W 30/80

(86) International application number:
**PCT/JP2022/017406**

(87) International publication number:
**WO 2022/220200 (20.10.2022 Gazette 2022/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.04.2021 JP 2021067686**

(71) Applicant: **TOPPAN INC.**
**Tokyo 110-0016 (JP)**

(72) Inventors:
• **NISHIKAWA Takeshi**
**Tokyo 110-0016 (JP)**
• **TANAKA Ayumi**
**Tokyo 110-0016 (JP)**

(74) Representative: **Hoffmann Eitle**
**Patent- und Rechtsanwälte PartmbB**
**Arabellastraße 30**
**81925 München (DE)**

(54) **GAS BARRIER FILM, PACKAGING MATERIAL, AND PACKAGING BAG**

(57) The present disclosure relates to a gas barrier film that includes a resin substrate, an underlayer, and a vacuum deposition layer, in which the resin substrate contains a polyolefin resin, and the underlayer contains a polyurethane resin that includes an acid group-containing polyurethane and a polyamine.

FIG.1

**Description**

[Technical Field]

The present disclosure relates to a gas barrier film, a packaging material, and a packaging bag. Specifically, the present disclosure relates to a gas barrier film, a packaging material, and a packaging bag that can be recycled.

[Background Art]

Regarding packaging materials in food, pharmaceuticals, and other applications, users require high recyclability at the time of disposal. The movement to replace conventional packaging materials with recyclable packaging materials is being promoted not only in Japan but also worldwide.
By the way, as gas barrier films used as packaging materials for food, pharmaceuticals, and the like, films are known that include a resin base material, a vacuum deposition layer, and a coating layer that is provided on the opposite side of the vacuum deposition layer from the resin base material (e.g., PTL 1).

[Citation List]

[Patent Literature]

[PTL 1] JP 2017-222151 A

[Summary of Invention]

[Technical Problem]

When trying to implement a mono-material package of all-polyolefin with good recyclability based on the disclosure of PTL 1, it is difficult to both simplify the layer composition and maintain the gas barrier properties. In order to solve various problems in implementing mono-material packages, it is necessary to develop gas barrier films specialized for solving such problems.
The present disclosure has been made in view of the above circumstances. An object of the present disclosure is to provide a polyolefin-based gas barrier film that can both simplify the layer composition and maintain gas barrier properties. Also, an object of the present disclosure is to provide a packaging material and a packaging bag using the gas barrier film.

[Solution to Problem]

The inventors have investigated polyolefin-based gas barrier films that are recyclable, have a simple layer structure that can be manufactured using fewer processes than conventional films, and yet have the desired gas barrier properties. As a result, the inventors have found that the above-described objects can be achieved by forming a vacuum deposition layer on a resin base material with a specific underlayer and have come to complete the gas barrier film of the present disclosure.
In other words, a gas barrier film according to one aspect of the present disclosure includes a resin base material, an underlayer, and a vacuum deposition layer, in which the resin base material contains a polyolefin resin, and the underlayer contains a polyurethane resin that includes an acid group-containing polyurethane and a polyamine.
When a polyolefin layer is used as the resin base material, the gas barrier properties are reduced compared to a polyester layer such as polyethylene terephthalate. Therefore, an underlayer and a vacuum deposition layer are formed on the base material to improve the gas barrier properties, but it is still difficult to obtain sufficient gas barrier properties. For example, in PTL 1, an underlayer and a vacuum deposition layer are formed on a polyolefin base material, and a coating layer is added on top of the underlayer to ensure the specified gas barrier properties. In contrast, in the gas barrier film of the present disclosure, since the underlayer is formed using a specific material, sufficient gas barrier properties can be secured with the composition of resin base material, underlayer, and vacuum deposition layer, i.e., without requiring a coating layer. The gas barrier film of the present disclosure enables both simplification of the layer composition and maintenance of gas barrier properties.
In an aspect, the resin base material may include a copolymer layer or a terpolymer layer on a surface of the resin base material that faces the underlayer.
In an aspect, the polyurethane resin may have an aromatic ring.
In an aspect, the vacuum deposition layer may include at least one type selected from the group consisting of metals, and oxides, nitrides, and oxynitrides thereof.

A packaging material according to an aspect of the present disclosure includes the above gas barrier film and a heat-sealable polyolefin film, the gas barrier film and the heat-sealable polyolefin film being laminated together via an adhesive layer.

A packaging bag according to an aspect of the present disclosure includes the above packaging material.

[Advantageous Effects of Invention]

According to the present disclosure, a polyolefin-based gas barrier film that can both simplify the layer composition and maintain gas barrier properties can be provided. Also, according to the present disclosure, a packaging material and a packaging bag using the gas barrier film can be provided.

[Brief Description of Drawings]

[Fig. 1] Fig. 1 is a cross-sectional view of a gas barrier film according to an embodiment of the present disclosure; and
[Fig. 2] Fig. 2 is a cross-sectional view of a packaging material according to an embodiment of the present disclosure.

[Description of Embodiments]

Preferred embodiments of the present disclosure will be described in detail below with reference to the drawings, as appropriate. In the drawings, identical or equivalent parts are marked with the same symbol, and redundant explanations are omitted. The dimensional proportions in the drawings are not limited to those shown in the drawings.

<Gas barrier film>

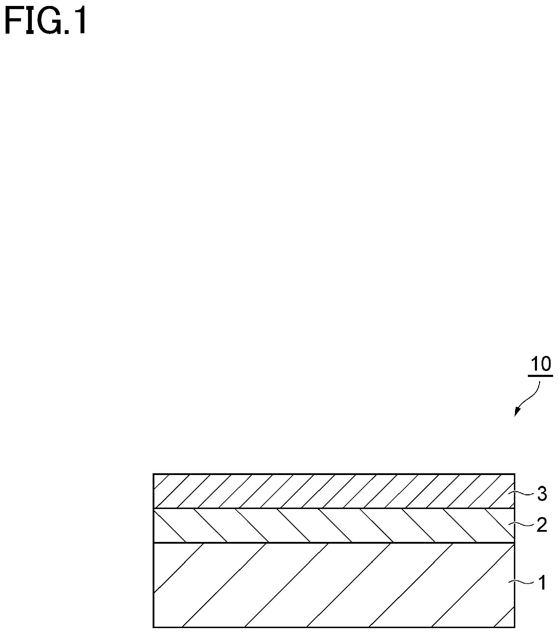

Fig. 1 is a cross-sectional view of a gas barrier film according to the present disclosure. The gas barrier film 10 of the present disclosure includes a resin substrate 1, an underlayer 2, and a vacuum deposition layer 3. The gas barrier film 10 may further include a protective layer that protects the vacuum deposition layer 3.

(Resin base material)

The resin base material contains a polyolefin resin. The resin base material is a base material (polyolefin film) for forming the vacuum deposition layer. Examples of polyolefin resins configuring the resin base material that may be used include polyethylene and polypropylene.

Examples of the polyethylene that may be used include high-density polyethylene (HDPE), in view of vapor deposition processing, printing processing, bag-making processing, and filling suitability. In addition, examples of the resin base material that may be used include a multilayer film such as high density polyethylene (HDPE)/medium density polyethylene (MDPE)/low density polyethylene (LDPE)/medium density polyethylene (MDPE)/high density polyethylene (HDPE) formed by, for example, a co-extrusion method, in order to improve physical properties such as flexibility.

Examples of the polypropylene that may be used include an oriented polypropylene (OPP). When polypropylene is used as the base material film for packaging, it is preferable that a homopolymer polypropylene be used.

From the viewpoint of adhesion and sealability, the resin base material may contain a copolymer layer of ethylene or propylene or a terpolymer layer of ethylene or propylene as a skin layer on the surface of a polyethylene layer or a polypropylene layer (homopolymer layer) as a core layer. For example, the resin base material may include a copolymer layer of propylene and ethylene, and a terpolymer layer of propylene, ethylene, and butene, and the like on the polypropylene surface.

The copolymer or terpolymer layer tend to improve the adhesion and sealability between layers configuring the packaging material. These layers also contain polyolefin resin. From the viewpoint of fully expressing adhesion and sealing properties improvement as skin layers, it is preferable that the content of olefin-based monomer units be more than 50 mass% based on the total amount of layers, and it is more preferable that the content be 75 mass% or more, and it is even more preferable that the content be 90 mass% or more.

Such copolymers include ethylene-based resins such as ethylene-vinyl acetate copolymer (EVA), ethylene-$\alpha$-olefin copolymer, or ethylene-(meth)acrylic acid copolymer; or polypropylene resins such as propylene-ethylene random copolymer, propylene-ethylene block copolymer, or propylene-$\alpha$-olefin copolymer.

The terpolymer may be a copolymer that has a monomer unit based on a monomer configuring the above copolymer and a monomer unit based on a monomer other than the monomer.

When the resin base material includes a core layer and a skin layer, the resin base material can be formed by co-extruding a homopolymer layer as the core layer and a copolymer layer or a terpolymer layer as the skin layer. For example, if a homopolymer OPP is used as the core layer, a copolymer or terpolymer of OPP may be used as the skin layer in terms of adhesion between the layers.

The polyolefin film configuring the resin base material may be a stretched or non-stretched film. However, the polyolefin film may be a stretched film in view of impact resistance, heat resistance, water resistance, and dimensional stability. This makes the packaging material more suitable for use in applications where hot water treatment such as hot filling, boiling, or retorting is applied. Stretching methods are not limited, and any method can be used, such as stretching by inflation, uniaxial stretching, biaxial stretching, etc., as long as a dimensionally stable film can be produced.

The thickness of the resin base material is not particularly limited. Depending on the application, the thickness can be in a range of 6 to 200 $\mu$m, but from the viewpoint of obtaining excellent impact resistance and good gas barrier properties, it may be more preferably in a range of 9 to 50 $\mu$m or even more preferably 12 to 38 $\mu$m.

When the resin base material includes a core layer and a skin layer, the thickness of the skin layer (or individual layers if there is more than one) can be in a range of 0.5 to 3 $\mu$m, and may be more preferably in a range of 0.6 to 2.5 $\mu$m. When there are multiple skin layers (e.g., skin layers on both sides of the core layer), the thickness of the individual layers may be the same or different.

The thickness of the core layer may be appropriately adjusted such that the thickness of the resin base material is preferably in the above range.

Various pretreatments such as corona treatment, plasma treatment, flame treatment, etc. may be applied to the resin base material to improve adhesion with the vacuum deposition layer to the extent that the barrier performance is not impaired. The same treatment may also be applied to the resin base material on the opposite side of the vacuum deposition layer.

(Underlayer)

An underlayer (anchor coat layer) containing a predetermined resin is provided on the side of the resin base material on which the vacuum deposition layer is laminated. The underlayer improves the gas barrier properties, the adhesion performance between the resin base material and the vacuum deposition layer, and the smoothness of the resin base material surface. The improved smoothness makes it easier to form the vacuum deposition layer uniformly without defects and to achieve high barrier properties.

The underlayer includes a polyurethane resin that is composed of an acid group-containing polyurethane and a polyamine.

The polyurethane resin is obtained by bonding the acid groups of the acid group-containing polyurethane with the amino groups of the polyamine as a cross-linking agent. In other words, the polyurethane resin is a reaction product of the acid group-containing polyurethane and polyamine, or the acid group-containing polyurethane is cross-linked by the polyamine. The bond between the acid group of the acid group-containing polyurethane and the amino group of the polyamine may be an ionic bond (e.g., an ionic bond between a carboxyl group and a tertiary amino group) or a covalent bond (e.g., an amide bond).

The acid group-containing polyurethanes configuring the polyurethane resin have anionic and self-emulsifying properties due to the presence of acid groups and are also referred to as anionic self-emulsifying polyurethanes. The acid groups of the acid group-containing polyurethanes are capable of bonding with the amino groups (primary amino groups, secondary amino groups, tertiary amino groups, etc.) of the polyamines that make up the polyurethane resin. Examples of acid groups include carboxyl groups and sulfonic acid groups. The acid groups can usually be neutralized by a neutralizing agent (base) and may form a salt with a base. The acid groups may be located at the ends of the acid group-containing polyurethane or in the side chains, but it is preferable that they be located at least in the side chains.

The acid number of the acid group-containing polyurethane can be selected within the range in which the acid group-containing polyurethane is water dispersible and can be in a range of 5 to 100 mg KOH/g, and may be more preferably in a range of 10 to 70 mg KOH/g or even more preferably 15 to 60 mg KOH/g. When the acid value of the acid group-containing polyurethane is above the lower limit of the above range, it is easier to obtain water dispersibility of the acid group-containing polyurethane and ensure uniform dispersion of the polyurethane resin and other materials and dispersion stability of the coating agent. When the acid value of the acid group-containing polyurethane is below the upper limit of the above range, it is easy to ensure the water resistance and gas barrier properties of the underlayer. The acid number of the acid group-containing polyurethane is measured by a method in accordance with JIS K 0070.

The total concentration of urethane groups and urea groups (urea groups) in the acid group-containing polyurethane can be in a range of 15 mass% or more, and may be more preferably in a range of 20 to 60 mass% from the viewpoint of gas barrier properties. When the total concentration of urethane and urea groups is above the above lower limit, the gas barrier properties of the underlayer are likely to be favorable. When the sum of the urethane and urea group concentrations is less than or equal to the upper limit of the above range, it is easy to suppress the rigidity and brittleness of the underlayer.

The urethane group concentration means the ratio of the molecular weight of urethane groups (59 g/equivalent) to the molecular weight of the constituent units of the polyurethane resin. Urea group concentration means the ratio of the molecular weight of urea groups (primary amino groups (amino groups): 58 g/equivalent, secondary amino groups (imino groups): 57 g/equivalent) relative to the molecular weight of the constituent units of the polyurethane resin. When a mixture of two or more types is used as a polyurethane containing acid groups, the urethane group concentration and urea group concentration can be calculated based on the prepared base of the reaction components, i.e., the ratio of each component used.

The acid group-containing polyurethane can have at least rigid units (units made of hydrocarbon rings) and short chain units (e.g., units made of hydrocarbon chains). The constituent units of acid group-containing polyurethanes may contain hydrocarbon rings (at least one of aromatic and non-aromatic hydrocarbon rings) derived from polyisocyanate components, polyhydroxy acid components, polyol components or chain extender components (especially, at least polyisocyanate components). From the viewpoint of improving oxygen barrier properties, polyurethane resins may contain aromatic rings, and thus the constituent units of acid group-containing polyurethanes may contain aromatic hydrocarbon rings as hydrocarbon rings.

The percentage of units made of hydrocarbon rings in the constituent units of the acid group-containing polyurethane relative to the total of all constituent units can be in a range of 10 to 70 mass%, and may be more preferably in a range of 15 to 65 mass% or even more preferably 20 to 60 mass%. When the percentage of units made of hydrocarbon rings is above the lower limit of the above range, the gas barrier properties of the underlayer tend to be good. When the percentage of units made of hydrocarbon rings is below the upper limit of the above range, it is easy to suppress the rigidity and brittleness of the underlayer.

The number average molecular weight of the acid group-containing polyurethane can be selected as desired, but can be in a range of 800 to 100,000, and may be more preferably in a range of 800 to 200,000 or even more preferably 800 to 100,000. When the number average molecular weight of the acid group-containing polyurethane is below the upper limit of the above range, it is easy to obtain an appropriate viscosity of the coating agent. When the number average molecular weight of the acid group-containing polyurethane is above the lower limit of the above range, the gas barrier properties of the underlayer r is easily improved. The number average molecular weight of the acid group-containing polyurethane is a value relative to a polystyrene standard, measured by gel permeation chromatography (GPC).

The acid group-containing polyurethane may be crystalline to enhance gas barrier properties. The glass transition temperature of the acid group-containing polyurethane can be in a range of 100°C or higher, and may be more preferably in a range of 110°C or higher or even more preferably 120°C or higher. When the glass transition temperature of the acid group-containing polyurethane is in a range of 100°C or higher, the gas barrier properties of the underlayer is easily improved. The glass transition temperature of the acid group-containing polyurethane can be in a range of 200°C or less, and may be more preferably in a range of 180°C or less or even more preferably 150°C or less. Therefore, the glass transition temperature of acid group-containing polyurethanes can be in a range of 100 to 200°C, and may be more preferably in a range of 110 to 180°C or even more preferably 120 to 150°C. The glass transition temperature of the group-containing polyurethanes is measured by differential scanning calorimetry (DSC).

The polyamine configuring the polyurethane resin is a compound having two or more basic nitrogen atoms. The basic nitrogen atoms are nitrogen atoms that can bond with the acid groups of the acid group-containing polyurethane. For example, the nitrogen atoms in amino groups such as primary amino groups, secondary amino groups, and tertiary amino groups. Examples of polyamines that may be used include various compounds having two or more basic nitrogen atoms, without being particularly limited, as long as they can bond with the acid groups of the acid group-containing polyurethane and improve gas barrier properties. Examples of polyamines that may be used include polyamines having at least one type of amino group selected from the group consisting of primary amino groups, secondary amino groups, and tertiary amino groups.

Examples of polyamines that may be used include alkylenediamines, polyalkylene polyamines, and silicon compounds having multiple basic nitrogen atoms may be used. Examples of alkylenediamines that may be used include ethylenediamine, 1,2-propylenediamine, 1,3-propylenediamine, 1,4-butanediamine, 1,6-hexamethylenediamine and other alkylenediamines with 2 to 10 carbons. Examples of polyalkylene polyamines that may be used include tetraalkylene polyamines. Examples of silicon compounds having multiple basic nitrogen atoms (including nitrogen atoms such as amino groups) that may be used include 2-[N-(2-aminoethyl)amino]ethyltrimethoxysilane, 3-[N -(2-aminoethyl)amino]propyltriethoxysilane, and other silane coupling agents having multiple basic nitrogen atoms.

The amine value of the polyamine can be in a range of 100 to 1900 mg KOH/g, and may be more preferably in a range of 150 to 1900 mg KOH/g, even more preferably 200 to 1900 mg KOH/g, still more preferably 200 to 1700 mg KOH/g, or even more preferably 300 to 1500 mg KOH/g. If the amine value of the polyamine is above the lower limit of the above range, the gas barrier properties of the underlayer are likely to be favorable. If the amine value of the polyamine is below the upper limit of the above range, the water dispersion stability of the polyurethane resin is likely to be favorable.

<Method of measuring amine value>

The amine value of polyamine is measured by the following method.

A sample of 0.5 to 2 g is weighed (sample weight Sg). 30 g of ethanol is added to the weighed sample and dissolved. Bromophenol blue is added, as indicator, to the resulting solution and is titrated with ethanolic hydrochloric acid solution of 0.2 mol/L (titer f). Then, with a point where the color of the solution changes from green to yellow as an endpoint, the titration volume (AmL) at this endpoint is used to obtain the amine value using the following formula 1.

$$\text{Formula 1: Amine value} = A \times f \times 0.2 \times 56.108 / S \text{ [mgKOH/g]}.$$

In forming the polyurethane resin, the molar ratio (acid group/basic nitrogen atom) between the acid group of the acid group-containing polyurethane and the basic nitrogen atom of the polyamine can be in a range of 10/1 to 0.1/1, and may be more preferably in a range of 5/1 to 0.2/1. If the acid group/basic nitrogen atom is within the above range, excellent oxygen barrier properties are easily expressed in the underlayer.

The polyurethane resin can be obtained dispersed in an aqueous medium (in the form of an aqueous dispersion). In other words, polyurethane resins can be referred to as aqueous polyurethane resins. The aqueous medium can be water, a water-soluble or hydrophilic organic solvent, or a mixture thereof. Examples of water-soluble or hydrophilic organic solvents include alcohols such as methanol, ethanol, and isopropanol; ketones such as acetone and methyl ethyl ketone; ethers such as tetrahydrofuran; cellosolves; carbitols; and nitriles such as acetonitrile. The aqueous medium may be water or have water as a major component. The content of water in the aqueous medium may be in a range of 70 mass% or more, or 80 mass% or more. The aqueous medium may or may not contain a neutralizing agent (base) that neutralizes the acid groups of the acid group-containing polyurethane.

In the aqueous dispersion of polyurethane resin, the average particle diameter of the dispersed particles (polyurethane resin particles) is not particularly limited and can be in a range of 20 to 500 nm, and may be more preferably in a range of 25 to 300 nm or even more preferably 30 to 200 nm. When the average particle diameter of the dispersed particles is below the upper limit of the above range, it is easier to ensure uniform dispersion of the dispersed particles and other materials and dispersion stability of the coating agent, and the gas barrier properties of the underlayer that includes the coating agent is improved. The average particle diameter can be measured with a concentrated particle size analyzer (FPAR-10, manufactured by Otsuka Electronics Co., Ltd.) by diluting the particles with water so that the solid concentration is in a range of 0.03 to 0.3 mass%.

Examples of polyurethane resins that may be used include commercially available polyurethane resins and polyurethane resins produced by known manufacturing methods. Examples of a polyurethane resin that is composed of an acid group-containing polyurethane and a polyamine as described above include Takelac WPB-341 (manufactured by Mitsui Chemicals, Inc.).

The method of producing polyurethane resins is not particularly limited and includes the usual aqueous techniques for polyurethane resins, such as the acetone method, prepolymer method, and the like. In the urethane conversion reaction, urethane conversion catalysts such as amine catalysts, tin catalysts, lead catalysts, etc. may be used as needed. For example, in an inert organic solvent such as acetone or other ketones, tetrahydrofuran or other ethers, acetonitrile or other nitriles, the acid group-containing polyurethanes can be prepared by reacting a polyisocyanate compound with a polyhydroxy acid and, if necessary, at least one of a polyol component and a chain extender component. More specifically, a prepolymer having isocyanate groups at the ends is formed by reacting a polyisocyanate compound, a polyhydroxy acid, and a polyol component in an inert organic solvent (especially a hydrophilic or water-soluble organic solvent), neutralizing with a neutralizing agent, dissolving or dispersing in an aqueous medium, and then adding and reacting with the chain extender component, and removing the organic solvent to prepare an aqueous dispersion of the acid group-containing polyurethane. Polyurethane resin in the form of an aqueous dispersion can be prepared by adding polyamine to the aqueous dispersion of acid group-containing polyurethane obtained in this way and heating, if necessary. When heating, the heating temperature can be in a range of 30 to 60°C.

In addition to the polyurethane resin described above, the underlayer may contain a water-soluble polymer. A water-soluble polymer refers to a polymer that can be dissolved in water. Dissolution here refers to the state in which the macromolecules, which are the solute, are dispersed in water, which is the solvent, at the molecular chain level to form a homogeneous system. More precisely, it refers to the state in which the intermolecular force between the polymer chains and water molecules becomes stronger than the intermolecular force between the polymer chains, the entanglement of the polymer chains is dissolved, and the polymer is uniformly dispersed in water. The water-soluble polymer improves the flexibility of the underlayer, making it easier to control the deterioration of the gas barrier properties due to post-processing.

Examples of water-soluble polymers that may be used include: polyvinyl alcohol resins such as polyvinyl alcohol polymers and derivatives thereof; vinyl polymers such as polyvinylpyrrolidone and polyhydroxyethylmethacrylate and copolymers thereof; polyacrylic acid, polymethacrylic acid or esters thereof, salts and their copolymers; cellulose derivatives such as carboxymethyl cellulose and hydroxyethyl cellulose; starch such as oxidized starch, etherified starch, and dextrin; copolymerized polyester containing acid components containing a polar group, such as sulfoisophthalic acid; water soluble urethane polymers; and functional group-modified polymers in which the functional groups (e.g., carboxyl groups) of various types of these polymers are modified. Examples of derivatives of polyvinyl alcohol-based polymers that may be used include graft polymers in which a monomer is grafted onto the side chain of the polyvinyl alcohol. Considering film cohesion strength, the degree of polymerization of the water-soluble polymer may be in a range of 200 or higher. The water-soluble polymers in the underlayer may be one or more than one type.

From the viewpoint of both gas barrier properties and flexibility of the underlayer, the water-soluble polymer may include at least one type of polyvinyl alcohol resin selected from the group consisting of polyvinyl alcohol polymers and derivatives thereof, with a saponification degree of 95% or more and a degree of polymerization of 300 or more. Polyvinyl alcohol resin may be included. The degree of polymerization of the polyvinyl alcohol resin can be in a range of 300 to 2400, and may be more preferably in a range of 450 to 2000. The higher the saponification or degree of polymerization of the polyvinyl alcohol resin, the lower the moisture absorption and swelling properties, and the easier it is to achieve a high gas barrier properties. When the degree of saponification of the polyvinyl alcohol resin is in a range of 95% or higher, it is easy to obtain sufficient gas barrier properties. When the degree of polymerization of the polyvinyl alcohol resin is in a range of 300 or higher, the gas barrier properties and film cohesive strength are resistant to deterioration. When the degree of polymerization of the polyvinyl alcohol resin is less than 2400, the viscosity of the coating agent becomes moderate, it is easy to mix uniformly with other components, and defects such as a decrease in gas barrier properties and adhesion strength are unlikely to occur.

The underlayer may have a cross-linked structure formed by a silane coupling agent from the viewpoint of further improving the gas barrier properties. Examples of silane coupling agents that may be commonly used include compounds in which an alkoxy group and an organic reactive group are bonded to a silicon atom.

Examples of silane coupling agents that may be used include compounds represented by $RSiX_3$ (wherein R is an organic reactive group and X is an alkoxy group). Examples of organic reactive groups that may be used include those having amino groups, (meth)acryloyl groups, epoxy groups, vinyl groups, mercapto groups, isocyanate groups, and isocyanurate groups. (Meth)acryloyl groups represent both acryloyl and methacryloyl groups. Examples of alkoxy groups that may be used include methoxy groups and ethoxy groups.

Examples of silane coupling agents having vinyl groups that may be used include vinyltrimethoxysilane and vinyltriethoxysilane.

Examples of silane coupling agents having epoxy groups that may be used include 2-(3,4-epoxycyclohexyl)ethyltrimethoxysilane, 3-glycidoxypropyltrimethoxysilane, 3-glycidoxypropyltriethoxysilane, 3-glycidoxypropylmethyldimethoxysilane, and 3-glycidoxypropylethyldiethoxysilane.

Examples of silane coupling agents having amino groups that may be used include 3-aminopropyltrimethoxysilane and 3-aminopropyltriethoxysilane.

Examples of silane coupling agents having mercapto groups that may be used include 3-mercaptopropyltrimethoxysilane and 3-mercaptopropylmethyldimethoxysilane.

Examples of silane coupling agents having (meth)acryloyl groups that may be used include 3-acryloxypropyltrimethoxysilane.

Examples of silane coupling agents having isocyanate groups that may be used include 3-isocyanatopropyltriethoxysilane.

Examples of silane coupling agents having isocyanurate groups that may be used include 1,3,5-tris(3-trimethoxysilylpropyl)isocyanurate.

Any one of these silane coupling agents may be used alone or in combination of two or more types. From the viewpoint of good reactivity with hydroxyl groups possessed by polyurethane resins and water-soluble polymers, silane coupling agents having epoxy groups are suitably used.

The underlayer may be composed of a liquid composition containing a polyurethane resin, a water-soluble polymer and a silane coupling agent as required (hereinafter also referred to as an undercoating agent) and may include a cured body of the composition. The undercoat may be said to be a heat dried (heat cured) product of the composition.

In the undercoating agent, the mass ratio of polyurethane resin to water-soluble polymer in solid content (polyurethane resin/water-soluble polymer) can be in a range of 85/15 to 10/90, and may be more preferably in a range of 75/25 to 20/80 or even more preferably 70/30 to 25/75. A solid ratio within the above range makes it easier to apply the undercoating agent evenly and to form an undercoating layer with excellent gas barrier properties and flexibility.

When the undercoating agent contains a silane coupling agent, the content (solid content) of the silane coupling agent can be in a range of 0.5 to 30 mass%, and may be more preferably in a range of 1 to 25 mass% or even more preferably 3 to 20 mass% of the total solid content in the undercoating agent. The silane coupling agent content within the above range makes it easy to form an undercoat layer with excellent gas barrier properties and flexibility.

The undercoating agent may contain known additives such as antioxidants, weathering agents, heat stabilizers, lubricants, crystal nucleating agents, ultraviolet absorbers, plasticizers, antistatic agents, colorants, fillers, and surfactants to the extent that the gas barrier properties are not compromised.

For coating the undercoating agent, known coating methods can be used without any restrictions, and include the dipping method (dipping method); methods using sprays, coaters, printing machines, and brushes.

The types of coaters and printers used for these methods and their coating methods include: gravure coaters such as direct gravure method, reverse gravure method, kiss reverse gravure method, offset gravure method; reverse roll coaters; micro-gravure coaters; direct gravure coaters; reverse gravure coaters; reverse roll coaters; micro-gravure coaters; chamber doctor coaters; air knife coaters; dip coaters; bar coaters; comma coaters; die coaters; and the like.

Methods for drying the undercoat agent are not limited, but include natural drying, drying in an oven at a predetermined temperature, using a dryer attached to the above coaters (e.g., arch dryer, floating dryer, drum dryer, infrared dryer), or the like. The drying conditions are determined by the method of drying, and conditions can be appropriately selected in accordance with the drying method. For example, in the method of drying in an oven, drying may be performed in a range of 60 to 100°C for 1 second to 2 minutes.

The thickness of the underlayer can be in a range of 10 to 1400 nm, and may be more preferably in a range of 50 to 1000 nm, even more preferably 120 to 800 nm, or still more preferably 150 to 600 nm. If the thickness of the underlayer is above the lower limit above, it is easy to obtain sufficient gas barrier properties and stretching resistance. If the thickness of the underlayer is less than or equal to the above upper limit, it is suitable for post-processing such as stretching treatment, and it is also easy to control drying load and production cost. The thickness of the underlayer can be measured, for example, by scanning electron microscopy (SEM).

(Vacuum deposition layer)

The vacuum deposition layer that may be used include at least one type selected from the group consisting of metals, and oxides, nitrides, and oxynitrides thereof, and specifically, metals such as metallic aluminum (Al), metal oxides such as silicon oxide (SiOx) and aluminum oxide (AlOx), metal nitrides such as silicon nitride (SiN), and metal oxynitrides such as silicon oxynitride (SiON). In terms of transparency and gas barrier properties, a material constituting the barrier layer may be aluminum oxide or silicon oxide, especially silicon oxide.

For example, the thickness of the vacuum deposition layer may be in a range of 5 to 100 nm and preferably in a range of 10 to 80 nm.

The vacuum deposition layer can be formed on the resin substrate, for example, by a vacuum evaporation method. Examples of heating methods for the vacuum evaporation method include electron beam heating, resistance heating, and induction heating. In order to improve the adhesion between the vacuum deposition layer and the resin base material (underlayer) and the density of the vacuum deposition layer, a plasma-assisted method or ion beam-assisted method can also be used for the deposition.

(Protective layer)

The protective layer (overcoating layer) provides the packaging material with superior gas barrier properties and also has a protective function for the vacuum deposition layer. The protective layer may contain water-soluble polymers. More specifically, the protective layer may be composed of a liquid composition containing a water-soluble polymer and may be said to be a heat-dried product of the composition.

Examples of the water-soluble polymer that may be used include the compounds exemplified in the underlayer. The water-soluble polymer may include at least one type of polyvinyl alcohol resin selected from the group consisting of polyvinyl alcohol polymers and derivatives thereof, from the viewpoint of achieving both gas barrier properties and flexibility of the protective layer.

The water-soluble polymer may be cured by a curing agent. The curing agent is not particularly limited, but from the viewpoint of maintaining excellent laminate strength after retorting, a metal alkoxide or silane coupling agent may be used.

Examples of metal alkoxides that may be used include compounds represented by the following general formula (I).

$$M(OR^1)_m(R^2)_{n-m} \cdots \qquad (I)$$

In the above general formula (I), $R^1$ and $R^2$ are each independently a monovalent organic group having 1 to 8 carbon atoms, and may be an alkyl group such as methyl group and ethyl group. M indicates an n-valent metal atom such as Si, Ti, Al, and Zr. m is an integer of 1 to n. When there is more than one $R^1$ or $R^2$, $R^1$ or $R^2$ may be identical or different from each other.

Examples of metal alkoxides specifically include tetraethoxysilane $[Si(OC_2H_5)_4]$ and aluminum isopropoxide

[Al(O-sec-$C_3H_7$)3]. These metal alkoxides are relatively stable in aqueous solvents after hydrolysis.

Examples of silane coupling agents that may be used include the compounds exemplified for the underlayer.

The protective layer is formed using a liquid composition (hereinafter referred to as an overcoating agent) obtained by adding raw materials containing a water-soluble polymer and, if necessary, a curing agent, to water or a water/alcohol mixture.

The amount of the curing agent in the overcoating agent can be in a range of 1 to 60 mass%, and may be more preferably in a range of 2 to 30 mass% or even more preferably 4 to 15 mass%, based on the total solid content of the overcoating agent, from the viewpoint of maintaining adhesion with the vacuum deposition layer and gas barrier properties.

The amount of metal alkoxide in the overcoating agent can be in a range of 10 to 60 mass%, and may be more preferably in a range of 15 to 50 mass% or even more preferably 20 to 40 mass%, based on the total solid content of the overcoating agent, from the viewpoint of maintaining adhesion and gas barrier properties with the vacuum deposited film layer.

The amount of silane coupling agent in the overcoating agent can be in a range of 1 to 30 mass%, and may be more preferably in a range of 2 to 25 mass% or even more preferably 4 to 15 mass% based on the total solids content of the overcoating agent, from the viewpoint of maintaining adhesion and gas barrier properties of the vacuum deposited film layer.

The overcoating agent may contain known additives such as dispersants, stabilizers, viscosity adjusters, colorants, and metal oxide particles to the extent that the gas barrier properties are not compromised.

The overcoating agent can be applied, for example, by dipping, roll coating, gravure coating, reverse gravure coating, air knife coating, comma coating, die coating, screen printing, spray coating, or gravure offset coating. The coating film made of the overcoating agent can be dried, for example, by hot air drying, hot roll drying, high frequency irradiation, infrared irradiation, UV irradiation, or a combination thereof.

For example, the temperature when drying the above coating film can be in a range of 50 to 150°C and may be more preferably in a range of 70 to 100°C. By setting the temperature during drying to be within the above range, it is easy to suppress cracking in the vacuum deposition layer and the protective layer, and excellent barrier properties can be obtained.

The thickness of the protective layer may be preferably in a range of 50 to 1000 nm, and more preferably in a range of 100 to 500 nm. When the thickness of the protective layer is 50 nm or more, it tends to provide more sufficient gas barrier properties while protecting the vacuum deposition layer, and when the thickness is in a range of 1000 nm or less, it tends to retain sufficient flexibility.

<Packaging material>

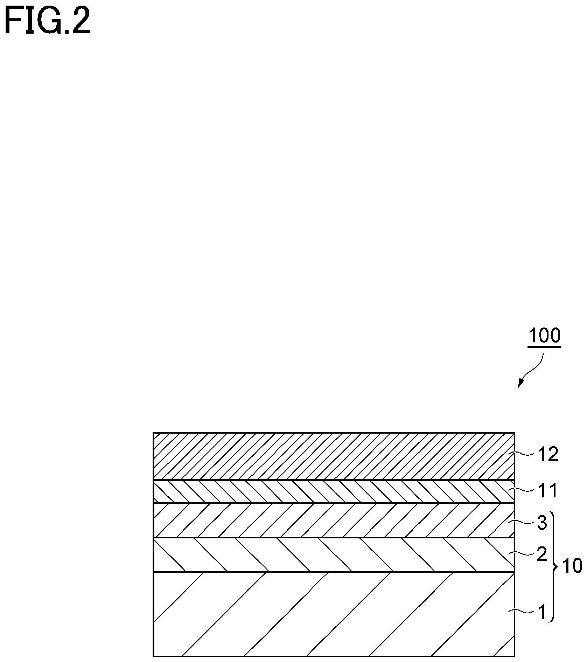

Fig. 2 is a cross-sectional view of a packaging material according to the present disclosure. The packaging material 100 of the present disclosure includes the above gas barrier film 10 and a heat-sealable polyolefin film 12. The above gas barrier film 10 and a heat-sealable polyolefin film 12 are laminated via an adhesive layer 11.

(Heat-sealable polyolefin film)

The heat-sealable polyolefin film is configured by a resin having a lower melting point than the polyolefin resin configuring the resin base material. Therefore, the heat-sealable polyolefin film can also be referred to as a sealant layer. The heat-sealable polyolefin film may be a non-stretched film (e.g., CPP).

The resin base material and the heat-sealable polyolefin film may include different materials, but may include the same material in terms of ease of reforming after melting of the resin material. Here, to be made of the same material means, for example, that both layers are made of polyethylene or both are made of polypropylene.

When the resin base material is polyethylene, linear low-density polyethylene (LLDPE) can be used as the heat-sealable polyolefin. A film having a laminate configuration in which the vacuum deposition layer side thereof is high-density polyethylene (HDPE) or medium density polyethylene (MDPE) and the heat-seal side thereof is low density polyethylene (LDPE) can also be used as heat-sealable polyolefin films, for example to provide rigidity.

When the resin base material is polypropylene, the following may be used as the heat-sealable polyolefin: low density polyethylene resin (LDPE); medium density polyethylene resin (MDPE); linear low density polyethylene resin (LLDPE); ethylene-based resin such as ethylene-vinyl acetate copolymer (EVA), ethylene-α olefin copolymer, and ethylene-(meth)acrylic acid copolymer; a blended resin of polyethylene and polybutene; homopolypropylene resin (PP); and polypropylene resin such as propylene-ethylene random copolymer, propylene-ethylene block copolymer, and propylene-α olefin copolymers.

Various additives such as flame retardants, slip agents, anti-blocking agents, antioxidants, light stabilizers, adhesive additives, etc. may be added to the heat-sealable polyolefin film.

The thickness of the heat-sealable polyolefin film is determined by the mass of the contents, the shape of the packaging bag, and the like, and may be, for example, in a range of 30 to 150 μm.

(Adhesive layer)

The gas barrier film and the heat-sealable polyolefin film are laminated via an adhesive layer. As means of laminating the two, a dry lamination method using an adhesive such as a onecomponent or two-component urethane adhesive, a non-solvent dry lamination method using a solvent-free adhesive, and an extrusion method using a polyolefin resin such as polyethylene or polypropylene that is melted by heating and extruded into a curtain shape may be used, and an extrusion lamination method, etc., in which polyolefin resins such as polyethylene and polypropylene are heated, melted, extruded, and bonded together in a curtain-like shape, can all be employed as known lamination methods.

As described above, all films (resin base material and heat-sealable polyolefin film) configuring the packaging material can be polyolefin film. Such packaging materials can be said to be materials made of a single material (of mono-material) with excellent recyclability. From this perspective, the total mass of components other than polyolefin components (e.g., components of the underlayer, vacuum deposition layer, protective layer, and adhesive layer) can be in a range of 10% or less, and may be more preferably in a range of 7.5% or less or even more preferably 5.0% or less, of the total mass of the packaging material.

<Packaging bag>

Packaging bags can be obtained by heat-sealing the heat-sealable polyolefin films of the packaging material thus obtained by aligning them. The packaging bag thus obtained can be filled with the contents and sealed to obtain a packaged body.

<Summary of the present embodiment>

[Invention 1]

A gas barrier film including a resin base material; an underlayer; and a vacuum deposition layer, the resin base material containing a polyolefin resin, and the underlayer containing a polyurethane resin that includes an acid group-containing polyurethane and a polyamine.

[Invention 2]

The gas barrier film according to Invention 1, wherein the resin base material includes a copolymer layer or a terpolymer layer on a surface of the resin base material that faces the underlayer.

[Invention 3]

The gas barrier film according to Invention 1 or 2, wherein the polyurethane resin has an aromatic ring.

[Invention 4]

The gas barrier film according to any one of Inventions 1 to 3, wherein the vacuum deposition layer contains at least one selected from a group consisting of metals, and oxides, nitrides, and oxynitrides thereof.

[Invention 5]

A packaging material including: the gas barrier film according to any one of claims 1 to 4; and a heat-sealable polyolefin film, the gas barrier film and the heat-sealable polyolefin film being laminated via an adhesive layer.

[Invention 6]

A packaging bag including: the packaging material according to Invention 5.

[Examples]

The present disclosure will be further described in detail by means of experimental examples, but the disclosure is not limited to these experimental examples.

<Production of gas barrier film>

Gas barrier films having the composition shown in Table 1 were prepared. Details of each configuration are as follows.

(Resin base material)

The following films were prepared as resin base materials.

OPP film A: ME-1, manufactured by Mitsui Chemicals Tohcello, Inc., 20 $\mu$m thickness (core layer: OPP (19 $\mu$m), skin layer: OPP (ethylene-containing copolymer, 1 $\mu$m)).

OPP film B: PJ201, manufactured by AJ PLAST, 20 $\mu$m thick (core layer: OPP (19 $\mu$m), skin layer: OPP (ethylene/butene-containing terpolymer, 1 $\mu$m)).

OPP film C: M-1, manufactured by Mitsui Chemicals Tohcello, Inc., 20 $\mu$m thickness.

PE film: SMUQ, manufactured by Tokyo Ink Co., 30 $\mu$m thickness.

(Underlayer)

An underlayer (a thickness of 0.15-0.2 $\mu$m) made of the following barrier polyurethane or PVA was formed on the resin base material (on the skin layer if there is a skin layer).

Barrier urethane A: Takelac WPB-341 (manufactured by Mitsui Chemicals, Inc., in which the aqueous dispersion of polyurethane resin is composed of acid group-containing polyurethane and polyamine, and the polyurethane resin has aromatic rings) was prepared. This was applied to the resin substrate and allowed to dry to form the underlayer.

Barrier urethane B: A coating solution was prepared by mixing Takelac WPB-341 and isocyanate silane KBE-9007N (manufactured by Shin-Etsu Chemical Co., Ltd.) at a solid content ratio of 9:1. This was applied to the resin base material and allowed to dry to form the underlayer.

Barrier urethane C: A coating solution was prepared by mixing a solution of Takelac WPB-341 and Kuraray Poval PVA-124 (manufactured by Kuraray Co., Ltd., fully saponified PVA) at a solid content ratio of 7:3. This was applied to the resin base material and allowed to dry to form the underlayer.

PVA: An aqueous solution of Kuraray Poval PVA-124 (manufactured by Kuraray Co., Ltd., fully saponified PVA) was applied to the resin base material and allowed to dry to form the underlayer.

(Vacuum deposition layer)

The following vacuum deposition layers were formed on the underlayer (and in some cases, on the resin substrate).

Silicon oxide deposition layer (SiOx layer, thickness 30 nm): SiO material was deposited using a vacuum vapor deposition apparatus of an electron beam heating method.

Aluminum oxide deposition layer (AlOx layer, thickness 14 nm): Metal aluminum was deposited with the addition of oxygen using a vacuum vapor deposition apparatus of an electron beam heating method.

(Protective layer)

The following protective layers 1 or 2 were formed on the vacuum deposition layer.

Protective layer 1 (PVA/TEOS layer): A coating solution was prepared by mixing a hydrolyzed solution of tetraethoxysilane (TEOS) and an aqueous solution of Kuraray Poval PVA-124 at a solid content ratio of 6:4. This coating solution was applied to the vacuum deposition layer by a gravure coating method and dried to form a protective layer with a thickness of 0.3 $\mu$m.

Protective layer 2 (PVA/TEOS/SC layer): A hydrolyzed solution of tetraethoxysilane (TEOS), a solution of Kuraray Poval PVA-124, and 1,3,5-tris(3-trimethoxysilylpropyl)isocyanurate were mixed at a solid ratio of 65/25/10. This was applied to the vacuum deposition layer by the gravure coating method and dried to form a protective layer with a thickness of 0.3 $\mu$m.

<Various evaluations>

[Oxygen transmission rate measurement]

The oxygen transmission rate (OTR) of the gas barrier film obtained in each case was measured in accordance with JIS K-7126-2 at a temperature of 30°C and relative humidity of 70% using an oxygen transmission coefficient measuring device (manufactured by MOCON, Inc., product name: OX-TRAN). The results are shown in Table 1. The unit of oxygen transmission rate is [cc/m2 -day atm].

[Water vapor transmission rate measurement]

The water vapor transmission rate (WVTR) of the gas barrier films obtained in each case was measured in accordance with JIS K-7126-2 at a temperature of 40°C and a relative humidity of 90% using a water vapor transmission rate measuring device (manufactured by MOCON, Inc., product name: PERMATRAN). The results are shown in Table 1. The unit of water vapor transmission rate is [g/m$^2$-day].

[Adhesion evaluation]

On the gas barrier film obtained in each case, 3 g/m$^2$ of Takelac A525/A52 (manufactured by Mitsui Chemicals, Inc.), a two-component urethane adhesive, was applied, and a CPP film ZK207 (manufactured by Toray Industries, Inc., thickness 60 $\mu$m) was laminated thereto. The resulting packaging material was then aged at 40°C for 2 days. The resulting packaging material was cut into 15 mm × 100 mm samples, and lamination strength was measured using these samples in accordance with JIS K6854-2. The measurement conditions were a peeling speed of 300 m/min and a peeling angle of 180 degrees. The evaluation criteria were as follows. The results are shown in Table 1.

A: Lamination strength is greater than 2 N/15 mm.
B: Lamination strength is greater than 1 N/15 mm and 2 N/15 mm or less.
C: Lamination strength is 1 N/15 mm or less.

[Table 1]

| | Base material | Surface of base material | Underlayer | Vacuum deposition layer | Protective layer | Oxygen transmission rate | Water vapor transmission rate | Adhesion |
|---|---|---|---|---|---|---|---|---|
| Example 1 | OPP-A | ethylene-containing | Barrier urethane A | $SiO_x$ | - | 80 | 2 | A |
| Example 2 | OPP-B | ethylene/ butenecontaining | Barrier urethane A | $SiO_x$ | - | 80 | 2 | A |
| Example 3 | OPP-A | ethylene-containing | Barrier urethane B | $SiO_x$ | - | 50 | 2 | A |
| Example 4 | OPP-A | ethylene-containing | Barrier urethane C | $SiO_x$ | - | 23 | 1 | A |
| Example 5 | PE | - | Barrier urethane A | $SiO_x$ | - | 90 | 2 | A |
| Example 6 | OPP-C | - | Barrier urethane A | $SiO_x$ | - | 80 | 2 | B |
| Example 7 | OPP-B | ethylene/ butenecontaining | Barrier urethane A | $AlO_x$ | - | 50 | 2 | A |
| Example 8 | OPP-B | ethylene/ butenecontaining | Barrier urethane A | $SiO_x$ | PVA/ TEOS | 5 | 1 | A |
| Example 9 | OPP-B | ethylene/ butenecontaining | Barrier urethane A | $SiO_x$ | PVA/ TEOS/SC | 7 | 1 | A |
| Comparative example 1 | OPP-C | - | - | $SiO_x$ | - | > 200 | 5 | C |
| Comparative example 2 | PE | - | - | $SiO_x$ | - | > 200 | 5 | C |
| Comparative example 3 | OPP-C | - | PVA | $SiO_x$ | - | 100 | 2 | C |

In the example, since the underlayer was formed using a specific material, sufficient gas barrier properties could be secured with the configuration of resin base material, underlayer, and vacuum deposition layer. The gas barrier film in the example does not require the formation of a protective layer, which means that it is possible to both simplify the layer composition and maintain the gas barrier properties.

[Industrial Applicability]

The packaging material equipped with the gas barrier film according to the present disclosure can have a polyolefin content of 90 mass% or more relative to the total packaging material and can be recycled as a material.

[Reference Signs List]

1: resin base material
2: underlayer
3: vacuum deposition layer
10: gas barrier film
11: adhesive layer
12: heat-sealable polyolefin film
100: packaging material

**Claims**

1.  A gas barrier film comprising:

    a resin base material;
    an underlayer; and
    a vacuum deposition layer,
    the resin base material containing a polyolefin resin, and
    the underlayer containing a polyurethane resin that includes an acid group-containing polyurethane and a polyamine.

2.  The gas barrier film according to claim 1, wherein
    the resin base material includes a copolymer layer or a terpolymer layer on a surface of the resin base material that faces the underlayer.

3.  The gas barrier film according to claim 1 or 2, wherein
    the polyurethane resin has an aromatic ring.

4.  The gas barrier film according to claim 1 or 2, wherein
    the vacuum deposition layer contains at least one selected from a group consisting of metals, and oxides, nitrides, and oxynitrides thereof.

5.  A packaging material comprising:

    the gas barrier film according to claim 1 or 2; and
    a heat-sealable polyolefin film,
    the gas barrier film and the heat-sealable polyolefin film being laminated via an adhesive layer.

6.  A packaging bag comprising:
    the packaging material according to claim 5.

FIG.1

# FIG.2

## INTERNATIONAL SEARCH REPORT

International application No.

**PCT/JP2022/017406**

### A. CLASSIFICATION OF SUBJECT MATTER

*B32B 27/32*(2006.01)i; *B32B 27/40*(2006.01)i; *B65D 65/40*(2006.01)i
FI:  B32B27/32 C; B32B27/40; B65D65/40 D

According to International Patent Classification (IPC) or to both national classification and IPC

### B. FIELDS SEARCHED

Minimum documentation searched (classification system followed by classification symbols)

  B32B27/32; B32B27/40; B65D65/40

Documentation searched other than minimum documentation to the extent that such documents are included in the fields searched

  Published examined utility model applications of Japan 1922-1996
  Published unexamined utility model applications of Japan 1971-2022
  Registered utility model specifications of Japan 1996-2022
  Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2014-76609 A (TOPPAN PRINTING CO LTD) 01 May 2014 (2014-05-01) claims, paragraphs [0020], [0026], [0031], [0051], [0059]-[0060], [0071]-[0072], fig. 1-3 | 1, 3-6 |
| Y | | 1-6 |
| Y | WO 2020/116544 A1 (TOPPAN PRINTING CO LTD) 11 June 2020 (2020-06-11) claims, paragraphs [0012], [0017], [0113] | 1-6 |
| Y | JP 2015-217558 A (TOPPAN PRINTING CO LTD) 07 December 2015 (2015-12-07) claims, paragraphs [0019]-[0020], [0024], [0037], [0089], [0091], [0094], [0106] | 1-6 |
| A | JP 2015-85546 A (TOPPAN PRINTING CO LTD) 07 May 2015 (2015-05-07) | 1-6 |
| A | JP 2020-168834 A (TOPPAN PRINTING CO LTD) 15 October 2020 (2020-10-15) | 1-6 |
| A | JP 2021-20392 A (TOPPAN PRINTING CO LTD) 18 February 2021 (2021-02-18) | 1-6 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **31 May 2022** | **14 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

| International application No. |
| --- |
| **PCT/JP2022/017406** |

| Patent document cited in search report | | | Publication date (day/month/year) | Patent family member(s) | | | Publication date (day/month/year) |
| --- | --- | --- | --- | --- | --- | --- | --- |
| JP | 2014-76609 | A | 01 May 2014 | (Family: none) | | | |
| WO | 2020/116544 | A1 | 11 June 2020 | US claims | 2021/0291501 | A1 | |
| | | | | EP | 3892463 | A1 | |
| JP | 2015-217558 | A | 07 December 2015 | US claims, examples | 2017/0057209 | A1 | |
| | | | | WO | 2015/174492 | A1 | |
| | | | | EP | 3144142 | A1 | |
| | | | | CN | 106457787 | A | |
| JP | 2015-85546 | A | 07 May 2015 | US | 2016/0237308 | A1 | |
| | | | | WO | 2015/064565 | A1 | |
| | | | | EP | 3064351 | A1 | |
| | | | | CN | 105682920 | A | |
| JP | 2020-168834 | A | 15 October 2020 | (Family: none) | | | |
| JP | 2021-20392 | A | 18 February 2021 | WO | 2021/020401 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017222151 A